# EUROPEAN PATENT APPLICATION

(11) **EP 2 922 348 A1**
(43) Date of publication of application: **23.09.2015**
(21) Application number: 14305400.5
(22) Date of filing: 21.03.2014
(51) Int. Cl.: H04W 48/16

(54) **Network configuration**

(71) Applicant: ALCATEL LUCENT, 92100 Boulogne-Billancourt (FR)
(72) Inventor: Wong, Shin Horng, Swindon, Wiltshire SN5 7DJ (GB); Puddle, Nicola, Swindon, Wiltshire SN5 7DJ (GB); Brend, Graham, Swindon, Wiltshire SN5 7DJ (GB); Warner, Martin, Swindon, Wiltshire SN5 7DJ (GB)
(74) Representative: Coghlan, Judith Elizabeth Kensy

(57) **Abstract**

Aspects and embodiments relate to a user equipment control method for user equipment operating to communicate with a network access node in a wireless communications network, and a computer program product and user equipment operable to perform that method. The method comprises: receiving, at user equipment, an indication of access criteria to be met in relation to at least two operational parameters associated with user equipment before user equipment can request transition from a first radio resource control state to a second radio resource control state, at least one of the operational parameters comprising: user equipment access group or user equipment access class; determining that user equipment requires a transition from the first radio resource control state to the second radio resource control state; assessing whether the user equipment meets the connection criteria in relation to said at least two operational parameters and, if so, requesting the transition from the first radio resource control state to the second radio resource control state. Aspects and embodiments may allow a network to admit user equipment based on combinations of static and dynamic characteristics, both in idle and connected mode.

## Description

### FIELD OF THE INVENTION

Aspects and embodiments relate to a user equipment control method for user equipment operating to communicate with a network access node in a wireless communications network, and a computer program product and user equipment operable to perform that method.

### BACKGROUND

Wireless telecommunications systems are known. In such known systems radio coverage is provided to network connectible devices known as user equipment (for example, mobile telephones, smart phones or tablets) in geographical regions. A network access node, such as a base station, is typically located in a geographical region and is typically operable to provide the required radio coverage to network connectible devices within that region. Network connectible devices in the region served by a network access node are typically operable to receive information and data from the network access node and to transmit information and data to the network access node.

In known wireless communication systems, network connectible devices can move between geographical regions in which radio coverage is provided by network access nodes. The regions of radio coverage supported by a network access node may be referred to as "cells".

In order to facilitate transmission of information and data between a network access node and a network connectible device, it is usual to configure network connectible devices to operate in one of a number of different Radio Resource Control (RRC) connection states. The different connection or communication states (such as cell_DCH, cell_FACH, cell_PCH or URA_PCH states) support different types of transmissions between the network access node and network connectible devices. Those different connection or communication states match expected traffic activity associated with a network connectible device.

Although existing techniques facilitate transmissions between network access nodes and network connectible devices in different connection states, difficulties can occur. Accordingly, it is desired to provide a technique for controlling operation of devices within a wireless communication network which may be of use when devices access a network in different connection states.

### SUMMARY

A first aspect provides a user equipment control method for user equipment operating to communicate with a network access node in a wireless communications network; the method comprising: receiving, at user equipment, an indication of access criteria to be met in relation to at least two operational parameters associated with user equipment before user equipment can request transition from a first radio resource control state to a second radio resource control state, at least one of the operational parameters comprising: user equipment access group or user equipment access class; determining that user equipment requires a transition from the first radio resource control state to the second radio resource control state; assessing whether the user equipment meets the access criteria in relation to said at least two operational parameters and, if so, requesting the transition from the first radio resource control state to the second radio resource control state.

The first aspect recognises that in known wireless networks there are 16 access classes. Those access classes can be used by a network to limit the number of user equipment, or network connectible devices, which are able to access a radio access network at any particular time. Each user equipment or network connectible device is typically manufactured such that it is associated with one of the basic access classes. That is to say, each user equipment is manufactured to be associated with an access class number between 0 and 9. User equipment maybe members of special access classes 10 to 15, only as a result of a service level selected by user equipment. That is to say, access class 10 is always used for emergency calls. If user equipment wishes to operate using a high service priority it may be operable to self-select an access class between 11 and 15. That is to say, the basic allocation (0 to 9) to which it was assigned as a result of manufacture may be overridden in the event that user equipment is seeking to support communication according to a service level associated with one or more of access class numbers 10 to 15.

A wireless communication network may be operable to use Access Class Barring (ACB) to manage congestion in a network. Access Class Barring may be utilised such that only user equipment or network connectible devices associated with a particular access class may be operable to establish communication with the network. For example, if a network is congested and wishes to only admit approximately 20% of user equipment during a period of congestion, the network may be operable to bar all access classes except 0 and 1. As a result, and assuming that access classes are uniformly distributed amongst user equipment, only approximately 20% or two in 10 user equipment may operate such that they request admission to communication with a network.

It will be understood that access classes 10 to 15 are associated with a higher service priority than access classes between 0 and 9, and that a network may be operable to utilise that information to only allow user equipment having a high priority service to access the network.

Typically, Access Class Barring information can be broadcast in a System Information Broadcast message (SIB) and user equipment operating in idle mode is operable to read such a broadcast message before any attempt to connect to the network. Consequently, user equipment which is aware of its basic access class and the classification of a service which it may be requesting can check the appropriate information within the System Information Broadcast message before attempting to connect to the network.

Access Class Barring is only used for user equipment in idle mode. Once user equipment is in a connected mode (for example, cell_PCH in UMTS) a network is no longer operable to use Access Call Barring to manage those connected user equipment. As a result, the network is not operable to prevent connected user equipment from triggering services, even if the network is experiencing a period of congestion and said triggering services will exacerbate the congestion.

The first aspect recognises that it is possible to offer an access control mechanism to network connectible devices which are operating in a connected mode. The first aspect recognises that it may be possible to associate user equipment with an active access parameter as well as an access class or access group, and that the active access parameter can also be used by user equipment and the network to allow finer control by a network to control which, and how many, connected or idle mode user equipment may be operable to trigger services. The first aspect recognises that it is possible to assign user equipment to an access group (which may also have associated numbers 0 to 15). That assignment of an access group to a connected user equipment may be performed by the network when the user equipment first connects to the network. Access groups differ from existing access classes since access classes are not assigned by the network and the network has control of access group assignment to user equipment. That is to say, the network can be operable to allocate specific user equipment to specific access groups.

The first aspect recognises that simple access class or group restriction or access class or group barring implemented by a network is such that the network has very limited knowledge of the operational parameters of network connectible devices. The first aspect recognises that during connection establishment, or whilst a user equipment is operating in idle mode, a network may be unaware of the type of service user equipment may subsequently intend to use. The first aspect recognises that it can be beneficial to improve restriction mechanisms, both in relation to idle mode user equipment requesting connection to the network, and to user equipment already connected to the network.

The first aspect recognises that it may be possible to implement restrictions in relation to user equipment which takes into account different operating parameters of user equipment within the network. As a result, it may be possible to allow differentiation of access delays or access restrictions for user equipment in a connected mode, or idle mode within a network. Such arrangements, which take into account more than one criteria, can be used to implement more focussed and more flexible restrictions within a network, which can improve overall network operation.

The method may comprise: receiving, at user equipment, an indication of access criteria to be met in relation to at least two operational parameters associated with user equipment before user equipment can request transition from a first radio resource control state to a second radio resource control state. The access criteria may comprise an absolute value or values which are to be met, may comprise a range of values, or require that a threshold value is met.

At least one of the operational parameters may comprise: user equipment access group or user equipment access class. Accordingly, the method of the first aspect may be used in conjunction with well understood access class and access group barring methods, used to restrict access, by user equipment, to a network.

The method may comprise: determining at the user equipment that user equipment requires a transition from the first radio resource control state to the second radio resource control state. That determining may comprise determining that the user equipment has something to send to the network, that the user requires service or similar.

The method may comprise: assessing whether the user equipment meets the connection criteria in relation to said at least two operational parameters and, if so, requesting the transition from the first radio resource control state to the second radio resource control state. Accordingly, only if the connection criteria are met can the user equipment take action to seek resource from the network, for example, by transmitting an RRC request to a network requesting a higher connected state.

The first aspect may be of use when a cell in a network, supported by a network access node, is experiencing congestion. Restricting operation of one or more user equipment within the network can alleviate congestion and unnecessary signalling.

In one embodiment, the method comprises: assessing whether the user equipment meets the access criteria in relation to the at least two operational parameters and, if not, preventing a request of transition from the first radio resource control state to the second radio resource control state. Accordingly, unless criteria are met, user equipment may operate to avoid requesting resource from a network.

In one embodiment, the indication of access criteria comprises: a lookup table indicating at least one allowable combination of the at least two operational parameters. Accordingly, information may be provided, and/or updated in a concise and efficient manner. It will be understood that such an arrangement results in an access bitmap which is not one-dimensional but can be multi-dimensional. That is to say, user equipment may be a member of a particular access class or access group that may also need to meet a further criteria before it is allowed to initiate communication with a network or to escalate its connection to the network from, for example, idle to connected or cell_FACH to cell_DCH.

In one embodiment, at least one of the operational parameters comprises: a static operational parameter associated with user equipment operable to communicate with the network access node. In one embodiment, the static operational parameter comprises one or more of: user equipment operational capability; user equipment hardware; user equipment access group; user equipment identity.

In one embodiment, at least one of the operational parameters comprises: a dynamic operational parameter associated with user equipment operable to communicate with the network access node. In one embodiment, the dynamic operational parameter comprises one or more of: user equipment access class; an indication of a service to be requested by the user equipment; an indication of radio condition being experienced by said user equipment; available power resource at the user equipment. According to some arrangements, a second dimension or second factor can be implemented by a network when performing network access restrictions. That further dimension may be such that access groups, together with, for example, a dynamic characteristic specific to one or more user equipment, can be taken into account. For example, in terms of restricting access to a network, user equipment may need to meet an access group membership requirement together with a service requirement or a radio condition requirement. According to such arrangements, user equipment may only be operable to access a network if its access group is not barred and the dynamic characteristic requirement is also met. As a result, a more flexible and focused network restriction requirement can be implemented.

In one embodiment, the second radio resource connection state comprises a radio resource connection state requiring greater resource than the first radio resource connection state. In one embodiment, the first radio resource connection state comprises idle mode or Cell_PCH. In one embodiment, the second radio resource connection state comprises: Cell_FACH or Cell_DCH.

In one embodiment, receiving comprises: receiving a broadcast message from the network access node. If implemented as a System Information Broadcast, user equipment operating in a connected state may be operable to read such a System Information Broadcast message prior to accessing a network. Such reading of a System Information Broadcast message ensures that user equipment within a region of coverage supported by a network access node can be made aware of access restrictions implemented by that access node.

In one embodiment, receiving comprises: receipt of RRC signalling from the network access node. Accordingly, a network may communicate specific instructions, including an indication of access criteria to one or more user equipment within a network.

A second aspect provides a computer program product operable, when executed on a computer, to perform the method of the first aspect.

A third aspect provides user equipment operable to communicate with a network access node in a wireless communications network; the user equipment comprising: reception logic operable to receive an indication of access criteria to be met in relation to at least two operational parameters associated with the user equipment to be met before user equipment can request transition from a first radio resource control state to a second radio resource control state, at least one of the operational parameters comprising: user equipment access group or user equipment access class; determination logic operable to determine that the user equipment requires a transition from the first radio resource control state to the second radio resource control state; assessment logic operable to assess whether the user equipment meets the access criteria in relation to the at least two operational parameters and, if so, to request the transition from the first radio resource control state to the second radio resource control state.

In one embodiment, the assessment logic is operable to assess whether the user equipment meets the access criteria in relation to the at least two operational parameters and, if not, to prevent a request of transition from the first radio resource control state to the second radio resource control state.

In one embodiment, the indication of access criteria comprises: a lookup table indicating at least one allowable combination of the at least two operational parameters.

In one embodiment, at least one of the operational parameters comprises: a static operational parameter associated with user equipment operable to communicate with the network access node.

In one embodiment, the static operational parameter comprises one or more of: user equipment operational capability; user equipment hardware; user equipment access group; user equipment identity.

In one embodiment, at least one of the operational parameters comprises: a dynamic operational parameter associated with user equipment operable to communicate with the network access node.

In one embodiment, the dynamic operational parameter comprises one or more of: an indication of a service to be requested by the user equipment; an indication of radio condition being experienced by said user equipment; available power resource at the user equipment.

In one embodiment, the second radio resource connection state comprises a radio resource connection state requiring greater resource than the first radio resource connection state.

In one embodiment, the first radio resource connection state comprises idle mode or Cell_PCH.

In one embodiment, the reception logic is operable to receive a broadcast message from the network access node.

In one embodiment, the reception logic is operable to receive RRC signalling from the network access node.

A fourth aspect provides a user equipment control method for user equipment operating to communicate with a network access node in a wireless communications network; the method comprising: determining, at a network control node, access criteria to be met in relation to at least two operational parameters associated with the user equipment before user equipment can request transition from a first radio resource control state to a second radio resource control state, at least one of the operational parameters comprising: user equipment access group or user equipment access class; and communicating an indication of the access criteria to the user equipment.

In one embodiment, the network control node comprises: the network access node.

In one embodiment, the method comprises: allocation of a network access group to user equipment, based on reported user equipment capability.

In one embodiment, the method comprises: reallocation of a previously allocated network access group to user equipment, based on operation of that user equipment within the network.

In one embodiment, the method comprises: identifying congestion within the network and updating the indication of access criteria accordingly.

A fifth aspect provides a computer program product operable, when executed on a computer, to perform the method of the fourth aspect.

A sixth aspect provides a network control node operable to control user equipment operable to communicate with a network access node in a wireless communications network; the network control node comprising: determination logic operable to determine access criteria to be met in relation to at least two operational parameters associated with the user equipment before user equipment can request transition from a first radio resource control state to a second radio resource control state, at least one of the operational parameters comprising: user equipment access group or user equipment access class; and communication logic operable to communicate an indication of the access criteria to the user equipment.

In one embodiment, the network control node comprises: access group allocation logic operable to allocate a network access group to user equipment, based on reported user equipment capability.

In one embodiment, the access group allocation logic is operable to reallocate a network access group to user equipment, based on operation of that user equipment within the network.

In one embodiment, the network control node comprises: congestion logic operable to identify congestion within the network and update the indication of connection criteria accordingly.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

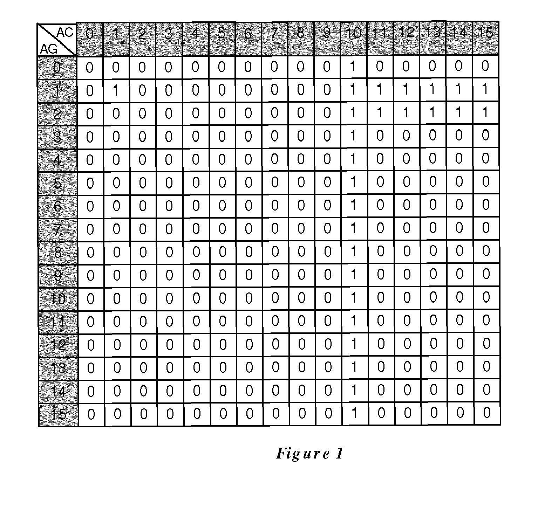

Figure 1 illustrates schematically a bitmap look-up table showing access restrictions according to one arrangement.

### DESCRIPTION OF THE EMBODIMENTS

Before discussing particular arrangements in more detail, an overview will be provided.

As mentioned previously, user equipment can operate in one of a number of different communication states. Each of those communication states is optimized for particular user equipment traffic conditions or operational demands. Different transport channels can be available to the user equipment when operating in each of the different communication or connection states.

It has been recognised that it can be useful to be able to restrict communication between a network access point and user equipment to aide congestion within networks. Such techniques may be applied to user equipment in idle mode or operating in various different RRC communication states.

It is recognised that it can be beneficial for a network to be able to restrict user equipment in dependence upon various dynamic parameters, or parameters related to particular services which might be sought by user equipment.

It is recognised that it may be possible to introduce a means to restrict access to a network which is based upon at least two factors. In particular, it is recognised that Access Class Barring or access group barring may be implemented in such a manner that the group or class barring can be implemented such that a second factor or characteristic related to user equipment can be taken into account.

It will be understood that such arrangement results in an access bitmap which is not one-dimensional but can be multi-dimensional. That is to say, user equipment may be a member of a particular access class or access group that may also need to meet a further criteria before it is allowed to initiate communication with a network or to escalate its connection to the network from, for example, idle to connected or cell_FACH to cell_DCH.

According to some arrangements, a second dimension or second factor can be implemented by a network when performing network access restrictions. That further dimension maybe such that access groups, together with, for example, a dynamic characteristic specific to one or more user equipment, can be taken into account. For example, in terms of restricting access to a network, user equipment may need to meet an access group membership requirement together with a service requirement or a radio condition requirement. According to such arrangements, user equipment may only be operable to access a network if its access group is not barred and the dynamic characteristic requirement is also met. As a result, a more flexible and focused network restriction requirement can be implemented.

It will be understood that the access restrictions can be broadcast in appropriate broadcast messages or in direct RRC messaging to one or more user equipment.

If implemented as a System Information Broadcast, user equipment operating in a connected state maybe operable to read such a System Information Broadcast message prior to accessing a network. Such reading of a System Information Broadcast message ensures that user equipment within a region of coverage supported by a network access node can be made aware of access restrictions implemented by that access node.

According to some arrangements, a factor to be used in relation to access restriction may be an indication of the user equipment service request. According to such an arrangement, a network may be operable to broadcast an indication of services which user equipment cannot use and gain access to the network. Of course, in some arrangements, a network may be operable to broadcast which services user equipment can use and gain access to a network. It will, of course, be appreciated that it is a matter of implementation as to whether a network operates to broadcast information which bars or allows access by user equipment using certain services.

According to some arrangements, access restrictions may be implemented such that both access class and access group are taken into account when assessing whether the user equipment can establish communication or escalate an RRC connected state. According to such an arrangement, user equipment can be operable to check its access class in addition to its access group whilst it is operating in a connected mode and before accessing the network. Accordingly, a network may be operable to control admission of user equipment services based on access group and use, for example, access class to be able to control a proportion of user equipment operating within a particular access group which can operate to access the network. Such proportion control can be implemented since access classes are typically allocated to user equipment in accordance with a uniform distribution.

In some arrangements, RF condition determined by the user equipment can be used in conjunction with access class or access group membership to restrict access to a network. In some embodiments, it may be possible to implement an access threshold Signal-to-Noise-and-Interference-Ratio (SNIR). User equipment can be assigned to an RF group based on its SNIR; for example, based upon received quality of downlink pilot signals. That RF measurement may be assessed at the point at which user equipment wishes to access the network. A network may be operable to bar user equipment determined to be operating in particular RF groups; for example, those experiencing poor RF conditions. Such an arrangement is such that those user equipment experiencing poor radio frequency conditions may be barred from accessing the network and the network is then prevented from using excessive power resource in order to communicate with user equipment experiencing poor RF conditions when it can be experiencing overload due to a lack of available power.

In some embodiments, a network may be operable to reassign an access group applied to one or more user equipment. Access groups may be assigned on the basis of reported static user equipment parameters such as user equipment capability. A network may determine that such a reassignment is necessary and perform such a reassignment by RRC signalling. The reassignment may be triggered if a network determines at initial assignment of user equipment to an access group was incorrect. Such incorrect assignment may include, for example, user equipment reporting an ability to be able to support specific capability and yet subsequently not using services associated with that capability for a pre-set, configurable time period.

According to one arrangement, assignment of user equipment to an access group can be based on user equipment type such that if, for example, there is a make or model of user equipment (which can be based on IMEI (international Mobile Station Equipment Identity)) which does not conform to the expected profile of user equipment operating with a particular capability, a network may be operable to assign or reassign such user equipment to a more appropriate access group, such reassignment occurring such that user equipment not meeting operational standards can be dealt with by the network separately to other user equipment reporting similar capabilities.

It will be appreciated that various factors can be used in combination to create a multi-dimensional access restriction map.

### Example 1

According to one example, a cell supported by an access node is congested. That congestion may comprise a large number of user equipment operating in cell_DCH state. When those user equipment established a connection with the network, the user equipment capability was reported to the network. As a result, a network has been operable to assign each of those user equipment to an access group based on their potential throughput. In the particular example given, user equipment with DC-HSDPA capability have been assigned to access group 1, SC-HSDPA capable user equipment have been assigned to access group 2, and non-HSDPAcapable user equipment have been allocated to access group 3.

In the example given, user equipment using access class 11 to 15 are operable to access the network since they may have high priority services. Those having an access class between 0 and 9 are assumed to be operating with low priority service. Access class 10 is used for emergency calls.

In the example given, the network is operable to decide to only admit user equipment which have high throughput capability (AG1) and, due to the network overload situation the network may decide to only admit 10% of those user equipment. To achieve that 10% the network is operable to allow only user equipment assigned to AG1 access and only admit one access class; for example, access class 1.
A bitmap of restriction requirements or access requirements relating to that combination of access group and access class is shown in Figure 1.

That bitmap may be broadcast by the network. In the example given, 0 indicates barred, whilst 1 indicates that user equipment meeting those criteria may access the network. In the shown scenario, AG=1 and AC is marked as 1. The network is also operable to allow user equipment having DC-HSDPA and HC-HSDPA capabilities having a high priority service (AC equals 11 to 15) to access the network, and thus the bitmap is marked as 1 for AG=1 and AG=2 for AC = 1 to 15. Since AC= 10 relates to emergency calls, the network is also operable to set all AG with AC=10 as 1 within the bitmap shown.

It will be appreciated that such a combination of AC and AG in relation to access restrictions can be implemented in a bitmap in which a range of AC are used; for example, AC 0 to 9 can comprise one list, and AC 10 to 15 may be implemented as a second list. Such an arrangement still allows a differentiation in relation to service priority. For example, AG1 plus AC 0 to 9 may be restricted; AG1 and AC 11 to 15 may be allowed.

Aspects and embodiments may allow a network to admit user equipment based on combinations of static and dynamic characteristics, both in idle and connected mode.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user equipment control method for user equipment operating to communicate with a network access node in a wireless communications network; said method comprising:
receiving, at said user equipment, an indication of access criteria to be met in relation to at least two operational parameters associated with said user equipment before user equipment can request transition from a first radio resource control state to a second radio resource control state, at least one of said operational parameters comprising:
user equipment access group or user equipment access class;
determining that said user equipment requires a transition from said first radio resource control state to said second radio resource control state;
assessing whether said user equipment meets said access criteria in relation to said at least two operational parameters and, if so, requesting said transition from said first radio resource control state to said second radio resource control state.

2. A method according to claim 1, comprising: assessing whether said user equipment meets said access criteria in relation to said at least two operational parameters and, if not, preventing a request of transition from said first radio resource control state to said second radio resource control state.

3. A method according to claim 1 or claim 2, wherein said indication of access criteria comprises: a lookup table indicating at least one allowable combination of said at least two operational parameters.

4. A method according to any one of claims 1 to 3, wherein at least one of said operational parameters comprises: a static operational parameter associated with user equipment operable to communicate with said network access node.

5. A method according to claim 4, wherein said static operational parameter comprises one or more of: user equipment operational capability; user equipment hardware; user equipment access group; user equipment identity.

6. A method according to any preceding claim, wherein at least one of said operational parameters comprises: a dynamic operational parameter associated with user equipment operable to communicate with said network access node.

7. A method according to claim 6, wherein said dynamic operational parameter comprises one or more of: user equipment access class; an indication of a service to be requested by said user equipment; an indication of radio frequency condition being experienced by said user equipment; available power resource at said user equipment.

8. A method according to any preceding claim, wherein said second radio resource connection state comprises a radio resource connection state requiring greater resource than said first radio resource connection state.

9. A method according to any preceding claim, wherein said first radio resource connection state comprises: Cell_PCH.

10. A method according to any preceding claim, wherein receiving comprises:
receiving a broadcast message from said network access node.

11. A method according to any preceding claim, wherein receiving comprises:
receipt of RRC signalling from said network access node.

12. User equipment operable to communicate with a network access node in a wireless communications network; said user equipment comprising:
reception logic operable to receive an indication of access criteria to be met in relation to at least two operational parameters associated with said user equipment to be met before user equipment can request transition from a first radio resource control state to a second radio resource control state, at least one of said operational parameters comprising: user equipment access group or user equipment access class;
determination logic operable to determine that said user equipment requires a transition from said first radio resource control state to said second radio resource control state;
assessment logic operable to assess whether said user equipment meets said access criteria in relation to said at least two operational parameters and, if so, to request said transition from said first radio resource control state to said second radio resource control state.

13. A user equipment control method for user equipment operating to communicate with a network access node in a wireless communications network; said method comprising:
determining, at a network control node, access criteria to be met in relation to at least two operational parameters associated with said user equipment before user equipment can request transition from a first radio resource control state to a second radio resource control state, at least one of said operational parameters comprising: user equipment access group or user equipment access class; and
communicating an indication of said access criteria to said user equipment.

14. A network control node operable to control user equipment operable to communicate with a network access node in a wireless communications network; said network control node comprising:
determination logic operable to determine access criteria to be met in relation to at least two operational parameters associated with said user equipment before user equipment can request transition from a first radio resource control state to a second radio resource control state, at least one of said operational parameters comprising:
user equipment access group or user equipment access class; and
communication logic operable to communicate an indication of said access criteria to said user equipment.

15. A computer program product operable, when executed on a computer, to perform the method of any one of claims 1 to 11 or claim 13.
